# FASCICULE DE BREVET EUROPEEN

(11) **EP 3 098 499 B1**
(45) Date de publication et mention de la délivrance du brevet: **18.04.2018**
(21) Numéro de dépôt: 16169482.3
(22) Date de dépôt: 13.05.2016
(51) Int. Cl.: F21S 8/10

(54) **BLOC OPTIQUE DE VÉHICULE À PLAQUE DE SUPPORT DE SOURCES DE LUMIÈRE PARTAGÉE POUR LE PLACEMENT D'UNE FONCTION PHOTOMÉTRIQUE DANS UNE AUTRE FONCTION PHOTOMÉTRIQUE**
LICHTBLOCK EINES FAHRZEUGS MIT HALTEPLATTE FÜR LICHTQUELLEN, DIE AUCH FÜR DIE EINRICHTUNG EINER FOTOMETRISCHEN FUNKTION IN EINER ANDEREN FOTOMETRISCHEN FUNKTION GENUTZT WIRD
VEHICLE HEADLAMP WITH PLATE FOR SUPPORTING SHARED LIGHT SOURCES FOR PLACING ONE PHOTOMETRIC FUNCTION IN ANOTHER PHOTOMETRIC FUNCTION

(30) Priorité: 27.05.2015 FR 1554731
(43) Date de publication de la demande: 30.11.2016
(73) Titulaire: PSA Automobiles SA, 78300 Poissy (FR)
(72) Inventeur: PERON, RODOLPHE, 95220 HERBLAY (FR)

(56) Documents cités:
- EP-A1- 1 762 775
- EP-A2- 1 972 532
- EP-A2- 2 071 228
- US-A1- 2013 272 009
- US-A1- 2014 133 169

## Description

L'invention concerne les blocs optiques de véhicule qui remplissent au moins deux fonctions photométriques.

On entend ici par « fonction photométrique » une fonction lumineuse assurée par un dispositif d'éclairage et choisie parmi l'éclairage extérieur d'un véhicule, la signalisation extérieure d'un véhicule et un effet lumineux décoratif d'un véhicule.

De nombreux blocs optiques de véhicule, éventuellement de type automobile, comprennent au moins deux dispositifs d'éclairage assurant des fonctions photométrique différentes. A titre d'exemple, un feu arrière peut offrir une fonction de feu de stop et une fonction de feu de position (ou lanterne ou encore veilleuse) et/ou une fonction de feu de jour (ou DRL (pour « Daytime running Light (or Lamp) » - signalisation lumineuse allumée automatiquement lorsque le véhicule est mis en fonctionnement pendant le jour)).

Ces dispositifs d'éclairage sont généralement indépendants les uns des autres et donc comportent leurs propres sources de lumière montées sur leurs propres cartes à circuits imprimés (de type PCB (« Printed Circuit Board »)) qui comportent également leurs propres moyens de commande. En outre, ces dispositifs d'éclairage sont généralement placés les uns à côté des autres dans un bloc optique et donc assurent des fonctions photométriques voisines, mais dont les zones d'éclairement ne sont pas imbriquées (c'est-à-dire l'une n'entourant pas au moins partiellement l'autre). Il en résulte que les blocs optiques sont encombrants (au moins suivant une direction transversale) et onéreux.

Il existe certes des blocs optiques dans lesquels des fonctions photométriques sont imbriquées. Mais ils présentent un encombrement longitudinal accru et une architecture interne notablement plus complexe du fait de l'absence de mutualisation d'éléments de leurs dispositifs d'éclairage.

Le document US 2013/0272009 décrit un bloc optique selon le préambule de la revendication 1.

L'invention a donc notamment pour but d'améliorer la situation.

Elle propose notamment à cet effet un bloc optique propre à équiper un véhicule et comprenant au moins des premier et second dispositifs d'éclairage comprenant respectivement au moins une première source de photons et au moins une seconde source de photons.

Ce bloc optique se caractérise par le fait qu'il comprend également :
- un premier réflecteur propre à transférer des photons délivrés par chaque première source vers une face avant,
- un second réflecteur placé devant une partie choisie du premier réflecteur et propre à transférer des photons délivrés par chaque seconde source vers la face avant, et
- une plaque de support placée au-dessus des premier et second réflecteurs et comprenant une face interne sur laquelle sont solidarisées les premières et secondes sources en des endroits choisis, ledit premier réflecteur comprenant une première paroi supérieure supportant ledit second réflecteur.

L'utilisation de réflecteurs placés l'un devant l'autre (en ayant, bien entendu, des dimensions différentes), et alimentés en photons par le dessus par des sources installées sur une plaque de support commune, permet d'imbriquer les fonctions photométriques assurées par les dispositifs d'éclairage, et donc de réduire l'encombrement et le coût du bloc optique.

Le bloc optique selon l'invention peut comporter d'autres caractéristiques qui peuvent être prises séparément ou en combinaison, et notamment :
➢ son second réflecteur peut comprendre une seconde paroi supérieure munie d'au moins deux premiers trous, et la première paroi supérieure peut comprendre au moins deux plots de couplage propres à traverser les premiers trous pour assurer un couplage entre les premier et second réflecteurs ;
   - sa plaque de support peut comprendre au moins deux deuxièmes trous propres à être traversés par certains au moins des plots de couplage pour permettre un couplage avec les premier et second réflecteurs ;
      o les pions de couplage peuvent comprendre des extrémités libres qui sont bouterollées une fois le couplage réalisé entre les premier et second réflecteurs et la plaque de support, de sorte que ces derniers soient solidarisés fixement entre eux ;
         - son second réflecteur peut être placé devant une partie centrale de son premier réflecteur, de sorte que les photons issus du premier dispositif d'éclairage entourent partiellement les photons issus du second dispositif d'éclairage au niveau de sa face avant ;
➢ son second réflecteur peut être propre à transférer les photons délivrés par le second dispositif d'éclairage vers une zone sensiblement rectangulaire de sa face avant, et son premier réflecteur peut être propre à transférer les photons délivrés par le premier dispositif d'éclairage vers une zone de la face avant en forme générale de U et entourant la zone sensiblement rectangulaire sur trois côtés ;
   - chaque première source et/ou chaque seconde source peut être une diode lumineuse, par exemple de type électroluminescent ou laser.

L'invention propose également un véhicule, éventuellement de type automobile, et comprenant au moins un bloc optique du type de celui présenté ci-avant.

D'autres caractéristiques et avantages de l'invention apparaîtront à l'examen de la description détaillée ci-après, et des dessins annexés (obtenus en CAO/DAO, d'où le caractère apparemment discontinu de certaines lignes), sur lesquels :
- la figure 1 illustre schématiquement, dans une vue en perspective du côté de la face avant, un exemple de réalisation d'un bloc optique selon l'invention,
- la figure 2 illustre schématiquement, dans une vue en perspective du côté avant, des exemples de réalisation de premier et second réflecteurs et de plaque de support destinés, une fois assemblés, à constituer un ensemble fonctionnel propre à équiper le bloc optique de la figure 1,
- la figure 3 illustre schématiquement, dans une vue en perspective du côté de la face interne, la plaque de support de la figure 2,
- la figure 4 illustre schématiquement, dans une vue en perspective du côté avant, les premier et second réflecteurs de la figure 1, une fois qu'ils ont été couplés l'un à l'autre, et
- la figure 5 illustre schématiquement, dans une vue en perspective du côté avant, l'ensemble fonctionnel obtenu après assemblage des premier et second réflecteurs et de la plaque de support de la figure 2.

L'invention a notamment pour but de proposer un bloc optique BO destiné à équiper un véhicule et permettant d'assurer au moins deux fonctions photométriques choisies parmi l'éclairage extérieur du véhicule, la signalisation extérieure du véhicule et un effet lumineux décoratif du véhicule.

Dans ce qui suit, on considère, à titre d'exemple non limitatif, que le bloc optique BO est destiné à équiper un véhicule automobile, comme par exemple une voiture. Mais l'invention n'est pas limitée à ce type de véhicule. En effet, elle concerne tout type de véhicule comportant au moins un bloc optique offrant au moins deux fonctions photométriques.

Par ailleurs, on considère dans ce qui suit, à titre d'exemple non limitatif, que le bloc optique BO est un feu arrière. Mais l'invention n'est pas limitée à ce type de bloc optique. En effet, elle concerne également les phares (ou projecteurs avant).

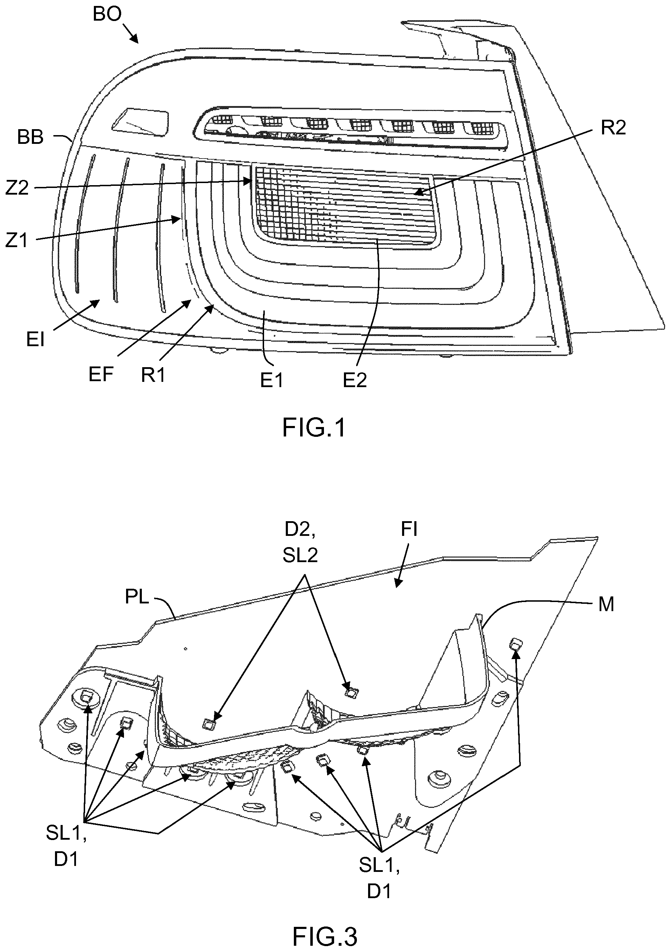

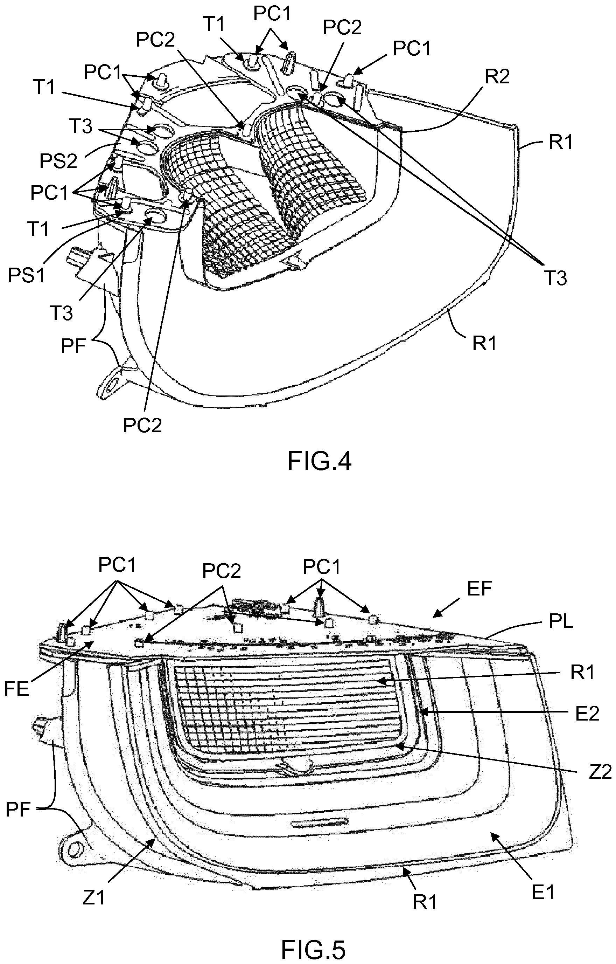

On a schématiquement illustré sur la figure 1 un exemple de réalisation non limitatif d'un bloc optique BO selon l'invention. Ce bloc optique BO comprend un boîtier BB, logeant fixement un ensemble fonctionnel EF (illustré sur la figure 5), et une glace, qui délimitent ensemble un espace interne.

Le boîtier BB est par exemple réalisé par moulage d'une matière plastique (ou synthétique). La glace peut être réalisée en matière plastique (ou synthétique) transparente (au moins en des endroits choisis) ou bien en verre.

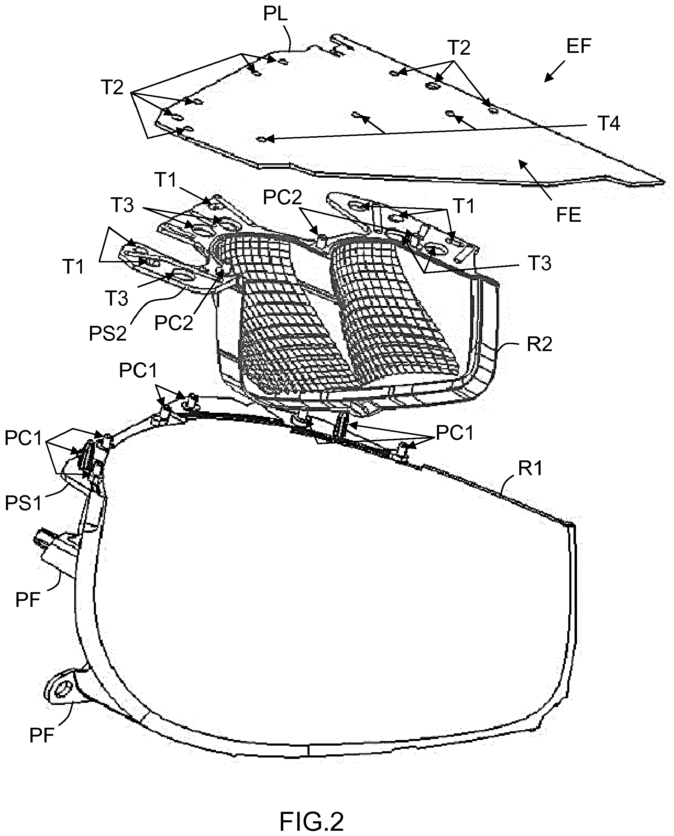

Comme illustré (au moins partiellement) sur les figures 2 et 5, l'ensemble fonctionnel EF d'un bloc optique BO selon l'invention comprend au moins des premier D1 et second D2 dispositifs d'éclairage, des premier R1 et second R2 réflecteurs, et une plaque de support PL.

Cet ensemble fonctionnel EF, une fois ses éléments assemblés, est solidarisé fixement au boîtier BB.

Le premier dispositif d'éclairage D1 comprend au moins une première source SL1 propre à délivrer des photons. Par exemple, chaque première source SL1 peut être une diode lumineuse, par exemple de type électroluminescent (ou DEL) ou laser. On notera que dans l'exemple non limitatif illustré sur la figure 3 le premier dispositif d'éclairage D1 comprend douze premières sources SL1 (dont neuf sont visibles). Mais il pourrait en comporter un nombre différent de douze et au moins supérieur ou égal à un (1).

Ce premier dispositif d'éclairage D1 est chargé de remplir au moins une fonction photométrique. Dans le cas d'un feu arrière, cette fonction photométrique peut, par exemple, être une fonction de feu de position (ou lanterne ou encore veilleuse). Mais il pourrait également s'agir d'une fonction de feu de stop ou d'une fonction de feu de jour (ou DRL) ou d'une fonction d'indication de changement de direction ou d'une fonction de feu de recul ou encore d'un effet lumineux décoratif.

Le second dispositif d'éclairage D2 comprend au moins une seconde source SL2 propre à délivrer des photons. Par exemple, chaque seconde source SL2 peut être une diode lumineuse, par exemple de type électroluminescent (ou DEL) ou laser. On notera que dans l'exemple non limitatif illustré sur la figure 3 le second dispositif d'éclairage D2 comprend deux secondes sources SL2. Mais il pourrait en comporter un nombre différent de deux et au moins supérieur ou égal à un (1).

Ce second dispositif d'éclairage D2 est chargé de remplir au moins une fonction photométrique. Dans le cas d'un feu arrière, cette fonction photométrique peut, par exemple, être une fonction de feu de stop. Mais il pourrait également s'agir d'une fonction de feu de position (ou lanterne ou encore veilleuse) ou d'une fonction de feu de jour (ou DRL) ou d'une fonction d'indication de changement de direction ou d'une fonction de feu de recul ou encore d'un effet lumineux décoratif.

Le premier réflecteur R1 est propre à transférer des photons délivrés par chaque première source SL1 vers une face avant du bloc optique BO.

On entend ici par « face avant » la face du bloc optique BO par laquelle sortent les photons des fonctions photométriques.

Le second réflecteur R2 est placé devant une partie choisie du premier réflecteur R1 et est propre à transférer des photons délivrés par chaque seconde source SL2 vers la face avant du bloc optique BO. Par conséquent, ce second réflecteur R2 présente des dimensions strictement inférieures à celles du premier réflecteur R1 pour permettre le passage des photons que ce dernier (R1) réfléchi vers la face avant du bloc optique BO.

De préférence, les premier R1 et second R2 réflecteurs sont réalisés par moulage d'une matière plastique (ou synthétique), avec ajout d'un revêtement réfléchissant sur leur face interne qui est dédiée au transfert des photons. Par exemple, ils peuvent être réalisés en polycarbonate (ou PC) puis métallisés, ou bien en PC blanc.

La plaque de support PL est placée au-dessus des premier R1 et second R2 réflecteurs (voir figures 2 et 5) et comprend une face interne FI sur laquelle sont solidarisées chaque première source SL1 et chaque seconde source SL2 en des endroits choisis (voir figure 3).

On entend ici par « face interne » la face de la plaque de support PL qui est orientée vers les premier R1 et second R2 réflecteurs, et par « face externe » (FE) la face de la plaque de support PL qui est opposée à sa face interne FI et donc orientée vers l'extérieur du boîtier BB.

En plaçant le second réflecteur R2 devant une partie choisie du premier réflecteur R1, et en alimentant en photons par le dessus les premier R1 et second R2 réflecteurs grâce au positionnement de la plaque de support PL commune qui supporte au moins les sources SL1 et SL2, on peut avantageusement imbriquer les zones d'éclairement des fonctions photométriques assurées par les premier D1 et second D2 dispositifs d'éclairage, et réduire l'encombrement global et le coût du bloc optique BO.

En outre, cela permet de masquer totalement les moyens de fixation du second réflecteur R2 tout en donnant l'impression qu'il est, en quelque sorte, en « lévitation » (ou suspendu).

Par exemple, la plaque de support PL peut être une carte à circuits imprimés (de type PCB (« Printed Circuit Board »)). Cela permet avantageusement de définir entièrement les premier D1 et second D2 dispositifs d'éclairage sur et dans la plaque de support PL, et en particulier leurs sources SL1 et SL2 et leurs moyens de commande respectifs. Cela permet de renforcer encore plus la mutualisation de moyens de l'ensemble fonctionnel EF et donc de réduire encore plus l'encombrement global et le coût du bloc optique BO.

On notera, comme illustré non limitativement sur la figure 3, qu'il est avantageux que la face interne FI de la plaque de support PL soit pourvue d'au moins une paroi M destinée à séparer les premières sources SL1 des secondes sources SL2, ainsi qu'éventuellement à séparer les unes des autres les premières sources SL1 et/ou les secondes sources SL2. Cela permet notamment d'éviter les lumières parasites dans l'ensemble fonctionnel du fait de la délimitation des fonctions imbriquées.

Comme illustré non limitativement sur les figures 4 et 5, le premier réflecteur R1 peut comprendre une première paroi supérieure PS1 qui supporte le second réflecteur R2. On notera, comme illustré non limitativement sur la figure 2 que cette première paroi supérieure PS1 peut éventuellement comprendre plusieurs sous-parties.

Dans ce cas, et comme illustré non limitativement sur les figures 2, 4 et 5, le second réflecteur R2 peut également comprendre une seconde paroi supérieure PS2 munie d'au moins deux premiers trous T1, et la première paroi supérieure PS1 peut comprendre (sur une face externe) au moins deux premiers plots de couplage PC1 propres à traverser les premiers trous T1 pour assurer un couplage entre les premier R1 et second R2 réflecteurs. De préférence, et comme illustré, certains au moins des premiers trous T1 présentent une surface qui est sensiblement supérieure à la section des premiers plots de couplage PC1 afin de tenir compte des tolérances de fabrication qui autorisent de petites variations dimensionnelles de ces derniers (PC1) et de petites variations de position des premiers trous T1 et/ou des premiers plots de couplage PC1.

On notera que dans une variante de réalisation non illustrée c'est la première paroi supérieure PS1 qui pourrait être munie d'au moins deux premiers trous T1, et c'est la seconde paroi supérieure PS2 qui pourrait comprendre (sur une face interne) au moins deux premiers plots de couplage PC1 propres à traverser les premiers trous T1 pour assurer un couplage entre les premier R1 et second R2 réflecteurs.

On notera également que dans l'exemple non limitatif illustré sur les figures 2, 4 et 5 la seconde paroi supérieure PS2 est munie de huit premiers trous T1, et la première paroi supérieure PS1 comprend (sur sa face externe) huit premiers plots de couplage PC1 propres à traverser respectivement les huit premiers trous T1. Mais le nombre de premiers trous T1 et de premiers plots de couplage PC1 peut prendre n'importe quelle valeur supérieure ou égale à deux (2), pour assurer un couplage minimum.

On notera également, comme illustré non limitativement sur les figures 2 et 4, que la seconde paroi supérieure PS2 peut éventuellement comprendre plusieurs sous-parties. Ici elle en comporte trois à titre d'exemple non limitatif.

Par ailleurs, et comme illustré non limitativement sur les figures 2 à 5, la plaque de support PL peut comprendre au moins deux deuxièmes trous T2 propres à être traversés par certains au moins des premiers plots de couplage PC1 pour permettre un couplage avec les premier R1 et second R2 réflecteurs. On comprendra que dans ce cas, la plaque de support PL est supportée par la première paroi supérieure PS1 et également par la seconde paroi supérieure PS2.

On notera que dans l'exemple non limitatif illustré sur les figures 2 à 5 la plaque de support PL est munie de huit deuxièmes trous T2 propres à être traversés respectivement par les huit premiers plots de couplage PC1 de la première paroi supérieure PS1. Mais le nombre de deuxièmes trous T2 pourrait être différent du nombre de premiers plots de couplage PC1, dès lors qu'il est au moins égal à deux (2), pour assurer un couplage minimum.

La seconde paroi supérieure PS2 est donc ici intercalée étroitement entre la première paroi supérieure PS1 et la plaque de support PL.

On notera également que les premiers pions de couplage PC1 comprennent des extrémités libres qui peuvent, par exemple, être bouterollées, éventuellement par chauffage, une fois le couplage réalisé entre les premier R1 et second R2 réflecteurs et la plaque de support PL (voir figure 5), de sorte que ces derniers (R1, R2, PL) soient solidarisés fixement entre eux. On réalise ainsi un ensemble fonctionnel EF qui peut être facilement installé dans le boîtier BB d'un bloc optique BO.

Dans une variante de réalisation non illustrée les extrémités libres des premiers pions de couplage PC1 pourraient être munies d'un filetage externe destiné à permettre le vissage d'écrous une fois le second réflecteur R2 et la plaque de support PL couplés au premier récepteur R1.

On notera également, comme illustré non limitativement sur les figures 2, 4 et 5, que le premier récepteur R1 peut comprendre sur sa face externe au moins une patte de fixation PF, et de préférence plusieurs, destinée(s) à permettre sa fixation au boîtier BB, et donc l'immobilisation de l'ensemble fonctionnel EF dans l'espace interne du bloc optique BO.

On notera également, comme illustré non limitativement sur les figures 2 et 4, que la seconde paroi supérieure PS2 peut éventuellement comprendre des troisièmes trous T3 définis en des endroits choisis destinés à permettre le passage entre les premier R1 et second R2 réflecteurs des parties de certaines au moins des premières sources SL1 qui délivrent les photons.

Dans l'exemple non limitatif illustré sur les figures 2 et 4 la seconde paroi supérieure PS2 est munie de cinq troisièmes trous T3 propres à être traversés respectivement par cinq premières sources SL1. Ici, les trois autres premières sources SL1 passent entre des sous-parties de la seconde paroi de support PS2. Mais le nombre de troisièmes trous T3 peut prendre n'importe quelle valeur au plus égale au nombre de premières sources SL1.

On notera également, comme illustré non limitativement sur les figures 2, 4 et 5, que la seconde paroi supérieure PS2 peut éventuellement comprendre (sur sa face externe) au moins un second plot de couplage PC2 propre à traverser un quatrième trou T4 correspondant, défini dans la plaque de support PL. Cette option est destinée à renforcer le couplage entre le second réflecteur R2 et la plaque de support PL.

Dans l'exemple non limitatif illustré sur les figures 2, 4 et 5 la seconde paroi supérieure PS2 comprend trois seconds plots de couplage PC2, et la plaque de support PL comprend trois quatrièmes trous T4. Mais le nombre de quatrièmes trous T4 et de seconds plots de couplage PC2 peut prendre n'importe quelle valeur supérieure ou égale à un (1).

On notera que dans une variante de réalisation non illustrée c'est la seconde paroi supérieure PS2 qui pourrait être munie d'au moins un quatrième trou T4, et c'est la plaque de support PL qui pourrait comprendre (sur sa face interne FI) au moins un second plot de couplage PC2 propre à traverser un quatrième trou T4 correspondant pour assurer un couplage entre elle (PL) et le second réflecteur R2.

Comme illustré non limitativement sur les figures 1, 4 et 5, le second réflecteur R2 peut être placé devant une partie centrale du premier réflecteur R1, de sorte que les photons qui sont issus du premier dispositif d'éclairage D1 entourent partiellement les photons qui sont issus du second dispositif d'éclairage D2 au niveau de la face avant du bloc optique BO. Ainsi, la zone d'éclairement de la fonction photométrique assurée par le second dispositif d'éclairage D2 se trouve au moins partiellement entourée par la zone d'éclairement de la fonction photométrique assurée par le premier dispositif d'éclairage D1.

On notera que dans l'exemple illustré non limitativement sur les figures 1 et 5 le second réflecteur R2 est placé et agencé de manière à transférer les photons délivrés par le second dispositif d'éclairage D2 vers une zone Z2 de la face avant du bloc optique, qui est sensiblement rectangulaire, et le premier réflecteur R1 est placé et agencé de manière à transférer les photons délivrés par le premier dispositif d'éclairage D1 vers une zone Z1 de la face avant du bloc optique BO, qui est en forme générale de U et qui entoure la zone sensiblement rectangulaire Z2 sur trois côtés. Mais il ne s'agit que d'un exemple de réalisation parmi de nombreux autres.

On notera également, comme illustré non limitativement sur les figures 1 et 5, que l'ensemble fonctionnel EF peut également et éventuellement comprendre un premier écran E1 destiné à matérialiser et éventuellement structurer la zone Z1 (et donc la zone d'éclairement de la fonction photométrique du premier dispositif d'éclairage D1), et un second écran E2 destiné à matérialiser et éventuellement structurer la zone Z2 (et donc la zone d'éclairement de la fonction photométrique du second dispositif d'éclairage D2). Mais dans une variante de réalisation non illustrée, ces premier E1 et second E2 écrans pourraient être externes à l'ensemble fonctionnel EF et être logés dans le boîtier BB en amont de la glace du bloc optique BO.

Ces premier E1 et second E2 écrans peuvent être réalisés en matière plastique (ou synthétique) (notamment en PC). Par ailleurs, ils peuvent être translucides ou opalins selon la fonction photométrique associée. De plus, l'un au moins de ces premier E1 et second E2 écrans peut éventuellement comprendre au moins un motif de forme choisie (comme par exemple des stries).

L'invention offre plusieurs avantages, parmi lesquels :
- une réduction de l'encombrement du bloc optique,
- une réduction du coût de fabrication du bloc optique,
- une réduction de la complexité du bloc optique,
- une réduction du poids du bloc optique,
- une amélioration des positionnements relatifs des zones d'éclairement des fonctions photométriques,
- un positionnement précis des sources de lumière participant aux fonctions photométriques,
- la possibilité de cacher complètement les moyens de fixation du second réflecteur.

## Revendications

1. Bloc optique (BO) propre à équiper un véhicule et comprenant au moins des premier (D1) et second (D2) dispositifs d'éclairage comprenant respectivement au moins une première source (SL1) de photons et au moins une seconde source (SL2) de photons, ledit bloc optique (BO) comprend en outre i) un premier réflecteur (R1) propre à transférer des photons délivrés par chaque première source (SL1) vers une face avant, ii) un second réflecteur (R2) placé devant une partie choisie dudit premier réflecteur (R1) et propre à transférer des photons délivrés par chaque seconde source (SL2) vers ladite face avant, et iii) une plaque de support (PL) placée au-dessus desdits premier (R1) et second (R2) réflecteurs et comprenant une face interne (FI) sur laquelle sont solidarisées chaque première source (SL1) et chaque seconde source (SL2) en des endroits choisis, **caractérisé en ce que** ledit premier réflecteur (R1) comprend une première paroi supérieure (PS1) supportant ledit second réflecteur (R2).

2. Bloc optique selon la revendication 1, **caractérisé en ce que** ledit second réflecteur (R2) comprend une seconde paroi supérieure (PS2) munie d'au moins deux premiers trous (T1), et ladite première paroi supérieure (PS1) comprend au moins deux plots de couplage (PC1) propres à traverser lesdits premiers trous (T1) pour assurer un couplage entre lesdits premier (R1) et second (R2) réflecteurs.

3. Bloc optique selon la revendication 2, **caractérisé en ce que** ladite plaque de support (PL) comprend au moins deux deuxièmes trous (T2) propres à être traversés par certains au moins desdits plots de couplage (PC1) pour permettre un couplage avec lesdits premier (R1) et second (R2) réflecteurs.

4. Bloc optique selon la revendication 3, **caractérisé en ce que** lesdits pions de couplage (PC1) comprennent des extrémités libres qui sont bouterollées une fois le couplage réalisé entre lesdits premier (R1) et second (R2) réflecteurs et ladite plaque de support (PL), de sorte que ces derniers (R1, R2, PL) soient solidarisés fixement entre eux.

5. Bloc optique selon l'une des revendications 1 à 4, **caractérisé en ce que** ledit second réflecteur (R2) est placé devant une partie centrale dudit premier réflecteur (R1), de sorte que les photons issus dudit premier dispositif d'éclairage (D1) entourent partiellement les photons issus dudit second dispositif d'éclairage (D2) au niveau de ladite face avant.

6. Bloc optique selon la revendication 5, **caractérisé en ce que** ledit second réflecteur (R2) est propre à transférer les photons délivrés par ledit second dispositif d'éclairage (D2) vers une zone (Z2) sensiblement rectangulaire de ladite face avant, et ledit premier réflecteur (R1) est propre à transférer les photons délivrés par ledit premier dispositif d'éclairage (D1) vers une zone (Z1) de ladite face avant en forme générale de U et entourant ladite zone sensiblement rectangulaire (Z2) sur trois côtés.

7. Bloc optique selon l'une des revendications 1 à 6, **caractérisé en ce que** chaque première source (SL1) et/ou chaque seconde source (SL2) est une diode lumineuse.

8. Véhicule, **caractérisé en ce qu'**il comprend au moins un bloc optique (BO) selon l'une des revendications précédentes.

9. Véhicule selon la revendication 8, **caractérisé en ce qu'**il est de type automobile.

## Patentansprüche

1. Scheinwerfereinsatz (BO), der geeignet ist, ein Fahrzeug auszustatten, und der mindestens eine erste (D1) und zweite (D2) Beleuchtungsvorrichtung umfasst, die jeweils mindestens eine erste Photonenquelle (SL1) und mindestens eine zweite Photonenquelle (SL2) umfassen, wobei der Scheinwerfereinsatz (BO) weiter i) einen ersten Reflektor (R1), der geeignet ist, Photonen, die von jeder ersten Quelle (SL1) ausgegeben werden, zu einer Vorderseite zu leiten, ii) einen zweiten Reflektor (R2), der vor einem ausgewählten Abschnitt des ersten Reflektors (R1) angeordnet und geeignet ist, Photonen, die von jeder zweiten Quelle (SL2) ausgegeben werden, zu der Vorderseite zu leiten, und iii) eine Trägerplatte (PL) umfasst, die über dem ersten (R1) und zweiten (R2) Reflektor angeordnet ist und eine Innenseite (FI) umfasst, auf der jede erste Quelle (SL1) und jede zweite Quelle (SL2) an ausgewählten Stellen befestigt sind, **dadurch gekennzeichnet, dass** der erste Reflektor (R1) eine erste obere Wand (PS1) umfasst, die den zweiten Reflektor (R2) trägt.

2. Scheinwerfereinsatz nach Anspruch 1, **dadurch gekennzeichnet, dass** der zweite Reflektor (R2) eine zweite obere Wand (PS2) umfasst, die mit mindestens zwei ersten Löchern (T1) versehen ist, und die erste obere Wand (PS1) mindestens zwei Koppelkontakte (PC1) umfasst, die geeignet sind, die ersten Löcher (T1) zu durchqueren, um eine Kopplung zwischen dem ersten (R1) und zweiten (R2) Reflektor sicherzustellen.

3. Scheinwerfereinsatz nach Anspruch 2, **dadurch gekennzeichnet, dass** die Trägerplatte (PL) mindestens zwei zweite Löcher (T2) umfasst, die geeignet sind, mindestens von Bestimmten der Koppelkontakte (PC1) durchquert zu werden, um eine Kopplung mit dem ersten (R1) und zweiten (R2) Reflektor zu ermöglichen.

4. Scheinwerfereinsatz nach Anspruch 3, **dadurch gekennzeichnet, dass** die Koppelstifte (PC1) freie Enden umfassen, die schließkopfgeformt werden, sobald die Kopplung zwischen dem ersten (R1) und zweiten (R2) Reflektor und der Trägerplatte (PL) hergestellt ist, so dass Letztere (R1, R2, PL) fest miteinander verbunden sind.

5. Scheinwerfereinsatz nach einem der Ansprüche 1 bis 4, **dadurch gekennzeichnet, dass** der zweite Reflektor (R2) vor einem mittleren Abschnitt des ersten Reflektors (R1) angeordnet ist, so dass die Photonen aus der ersten Beleuchtungsvorrichtung (D1) teilweise die Photonen aus der zweiten Beleuchtungsvorrichtung (D2) auf Höhe der Vorderseite umgeben.

6. Scheinwerfereinsatz nach Anspruch 5, **dadurch gekennzeichnet, dass** der zweite Reflektor (R2) geeignet ist, die Photonen, die von der zweiten Beleuchtungsvorrichtung (D2) ausgegeben werden, zu einem im Wesentlichen rechteckigen Bereich (Z2) der Vorderseite zu leiten, und der erste Reflektor (R1) geeignet ist, die Photonen, die von der ersten Beleuchtungsvorrichtung (D1) ausgegeben werden, zu einem im Allgemeinen U-förmigen Bereich (Z1) der Vorderseite zu leiten, der den im Wesentlichen rechteckigen Bereich (Z2) auf drei Seiten umgibt.

7. Scheinwerfereinsatz nach einem der Ansprüche 1 bis 6, **dadurch gekennzeichnet, dass** jede erste Quelle (SL1) und/oder jede zweite Quelle (SL2) eine Leuchtdiode ist.

8. Fahrzeug, **dadurch gekennzeichnet, dass** es mindestens einen Scheinwerfereinsatz (BO) nach einem der vorstehenden Ansprüche umfasst.

9. Fahrzeug nach Anspruch 8, **dadurch gekennzeichnet, dass** es ein Kraftfahrzeug ist.

## Claims

1. Optical unit (BO) conducive to equipping a vehicle and comprising at least first (D1) and second (D2) lighting devices respectively comprising at least one first photon source (SL1) and at least one second photon source (SL2), said optical unit (BO) further comprising i) a first reflector (R1) conducive to transferring photons delivered by each first source (SL1) to a front face, ii) a second reflector (R2) placed in front of a chosen part of said first reflector (R1) and conducive to transferring photons delivered by each second source (SL2) to said front face, and iii) a support plate (PL) placed above said first (R1) and second (R2) reflectors and comprising an internal face (FI) whereon are connected each first source (SL1) and each second source (SL2) in the chosen places, **characterised in that** said first reflector (R1) comprises a first upper wall (PS1) supporting said second reflector (R2).

2. Optical unit according to claim 1, **characterised in that** said second reflector (R2) comprises a second upper wall (PS2) equipped with at least two first holes (T1), and said first upper wall (PS1) comprises at least two coupling platforms (PC1) conducive to crossing said first holes (T1) to ensure a coupling between said first (R1) and second (R2) reflectors.

3. Optical unit according to claim 2, **characterised in that** said support plate (PL) comprises at least two second holes (T2) conducive to being crossed by at least some of said coupling platforms (PC1) to enable a coupling with said first (R1) and second (R2) reflectors.

4. Optical unit according to claim 3, **characterised in that** said coupling pins (PC1) comprise free ends which are riveted once the coupling is achieved between said first (R1) and second (R2) reflectors and said support plate (PL), such that the latter (R1, R2, PL) are rigidly connected to each other.

5. Optical unit according to one of the claims 1 to 4, **characterised in that** said second reflector (R2) is placed in front of a central part of said first reflector (R1), such that the photons coming from said first lighting device (D1) partially surround the photons coming from said second lighting device (D2) at the level of said front face.

6. Optical unit according to claim 5, **characterised in that** said second reflector (R2) is conducive to transferring the photons delivered by said second lighting device (D2) to a substantially rectangular zone (Z2) of said front face, and said first reflector (R1) is conducive to transferring the photons delivered by said first lighting device (D1) to a generally U-shaped zone (Z1) of said front face and surrounding said substantially rectangular zone (Z2) on three sides.

7. Optical unit according to one of the claims 1 to 6, **characterised in that** each first source (SL1) and/or each second source (SL2) is a light-emitting diode.

8. Vehicle, **characterised in that** it comprises at least one optical unit (BO) according to one of the preceding claims.

9. Vehicle according to claim 8, **characterised in that** it is of an automotive type.
